# EUROPEAN PATENT APPLICATION

(11) **EP 4 477 466 A1**
(43) Date of publication of application: **18.12.2024**
(21) Application number: 24182225.3
(22) Date of filing: 14.06.2024
(51) Int. Cl.: B60N 2/28

(54) **CHILD SAFETY SEAT AND SEAT THEREOF**

(30) Priority: 15.06.2023 CN 202310714243
(71) Applicant: Wonderland Switzerland AG, 6312 Steinhausen (CH)
(72) Inventor: FANG, Ganqing, Dongguan, Guangdong, 523648 (CN)
(74) Representative: Kretschmann, Dennis

(57) **Abstract**

The present application relates to a child safety seat (1000) and a seat (100) thereof. The seat (100) of the child safety seat (1000) is configured to be mounted on a base (200) of the child safety seat (1000), an upper part of the seat (100) is provided with an engaging member (3), and the engaging member (3) is configured for a top tether (4) connected to the base (200) to extend through, and for supporting the top tether (4).

## Description

### TECHNICAL FIELD

The present application relates to a child safety seat and a seat thereof.

### BACKGROUND

A child safety seat can be mounted on a vehicle seat for a child to seat, and it can effectively ensure safety of the child in the vehicle. A typical child safety seat includes a base and a seat. The seat may be mounted on the base facing forward or backward, and the seat defines a space for receiving the child. The base can be connected to the vehicle seat via an ISOFIX connector or an in-vehicle seat belt, so as to secure the child safety seat to the vehicle seat.

In order to prevent the seat from tilting forward and causing injury to the child when the vehicle has an accident, the child safety seat in the related art can also be configured with a top tether, one end of the top tether is only connected with one of the base of the child safety seat and the seat, and the other end is disposed from above the vehicle seat to a rear of the vehicle seat, and is connected with an anchoring point behind the vehicle seat. When the child safety seat is impacted, a large relative movement occurs between the seat and the base, which brings discomfort to the child and poses a safety risk.

### SUMMARY

In one aspect, the present application provides a seat of a child safety seat configured to be mounted on a base of the child safety seat, wherein an upper part of the seat is provided with an engaging member, and the engaging member is configured for a top tether connected to the base to extend through, and for supporting the top tether.

Further, the engaging member is located in a middle position of an outer side of the seat.

Further, the engaging member itself defines a channel through which the top tether extends, or the engaging member cooperates with the seat to define a channel through which the top tether extends.

Further, the seat includes a main housing, the main housing includes a seat section and a backrest section, a fixing rod is mounted on an inner side of the backrest section, and the backrest section is provided with a through hole penetrating the inner side and the outer side thereof; the engaging member includes an engaging rod and connecting arms extending from both ends of the engaging rod, the engaging rod is configured to support the top tether, and the connecting arm extends through the through hole and is connected to the fixing rod.

Further, at least two clamping sockets are disposed on the inner side of the backrest section, the at least two clamping sockets are disposed at intervals in a left-right direction of the seat, each clamping socket is provided with a clamping slot, and the fixing rod is clamped into the clamping slot; and/or the fixing rod is connected to the backrest section by at least one fastener.

Further, at least two clamping sockets are disposed on the inner side of the backrest section, the at least two clamping sockets are disposed at intervals in a left-right direction of the seat, each clamping socket is provided with a clamping slot, and the fixing rod is clamped into the clamping slot, at least one spacing sleeve is sleeved on the fixing rod, and each spacing sleeve is located between two adjacent clamping sockets.

Further, each connecting arm includes an arm body and a plate; the arm body is connected to the engaging rod; and the plate is sleeved on the fixing rod and extends through the through hole to connect to the arm body.

Further, the seat further includes an outer housing mounted on the outer side of the main housing, an upper edge of the outer housing is provided with a notch that cooperates with the arm body, and a connecting point between the arm body and the plate is located between the main housing and the outer housing.

Further, the seat includes a plastic housing, and the engaging member is formed integrally with the plastic housing.

Further, the engaging member includes a belt, and two ends of the belt are connected to the seat, respectively.

Further, the engaging member is movably connected to the seat, and the engaging member has a using position deployed from the seat and a stowed position attached to the seat.

Further, the outer side of the seat is provided with a groove for receiving the engaging member; and/or the engaging member is pivotally connected to the seat.

Further, the engaging member is connected to the seat via a pivot, the seat is provided with a first holding mechanism and a second holding mechanism, the first holding mechanism is configured to keep the engaging member in the using position, and the second holding mechanism is configured to keep the engaging member in the stowed position.

In another aspect, the present application provides a child safety seat including a base, a top tether, and the foregoing seat.

Further, the seat is mounted on the base facing forward, a first end of the top tether is connected to the base, a middle part of the top tether is supported by the engaging member, and a second end of the top tether is provided with a connector.

### BRIEF DESCRIPTION OF THE DRAWINGS

The accompanying drawings, which form a part hereof, serve to provide a further understanding of the application, and the illustrative embodiments of the application and the description thereof serve to explain the application, and are not to be construed as unduly limiting the application.
FIG. 1 illustrates a rear perspective view of a child safety seat according to some embodiments of the present application, which shows a seat of the child safety seat according to some embodiments of the present application;
FIG. 2 illustrates a side perspective view of the child safety seat shown in FIG. 1, with the top tether omitted;
FIG. 3 illustrates an enlarged view at part A1 in FIG. 2;
FIG. 4 illustrates a partial exploded view of the seat shown in FIG. 2;
FIG. 5 illustrates an enlarged view at part A2 in FIG. 4;
FIG. 6 illustrates another rear perspective view of the child safety seat shown in FIG. 1, with an outer housing and the top tether omitted;
FIG. 7 illustrates an enlarged view at part A3 in FIG. 6;
FIG. 8 illustrates an assembled view of an engaging member and a fixing rod shown in FIG. 4;
FIG. 9 illustrates a rear perspective view of a child safety seat according to some embodiments of the present application, which shows a seat according to some variant embodiments of the present application;

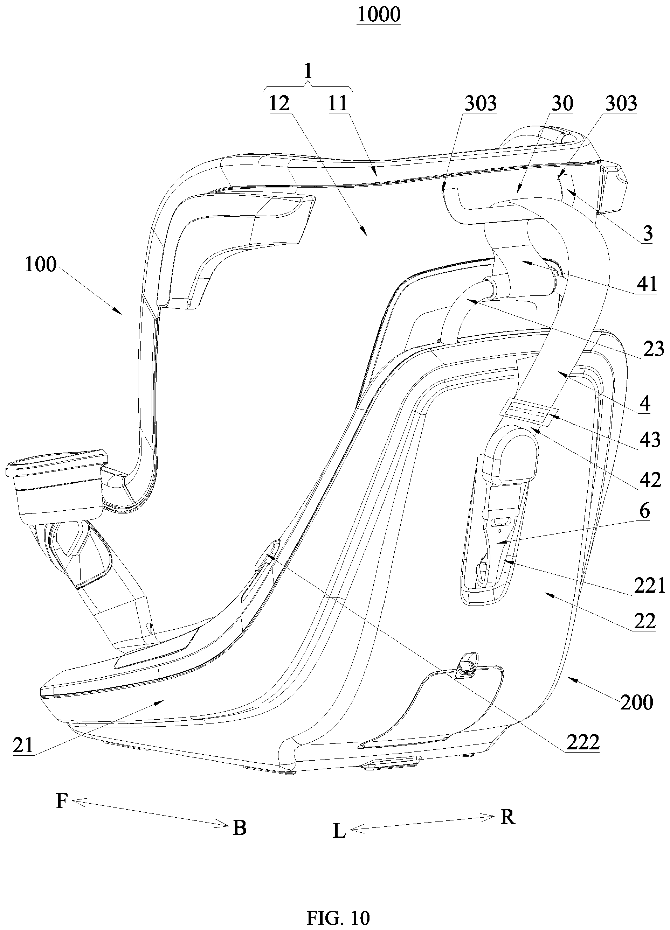

FIG. 10 illustrates a rear perspective view of a child safety seat according to some embodiments of the present application, which shows a seat according to some variant embodiments of the present application;
FIG. 11 illustrates a rear perspective view of a child safety seat according to some embodiments of the present application, which shows a seat according to some variant embodiments of the present application;
FIG. 12 illustrates an enlarged view at part A4 in FIG. 11; and
FIG. 13 schematically illustrates a perspective view of the engaging member shown in FIG. 11 assembled on a pivot.

### DETAILED DESCRIPTION OF THE EMBODIMENTS

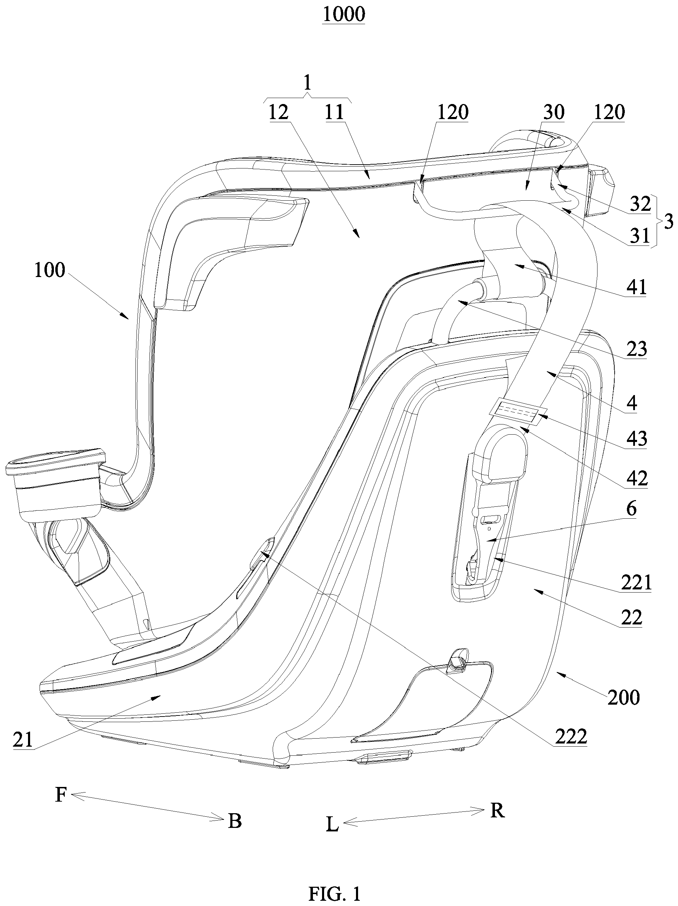

Referring to FIG. 1 to FIG. 3, FIG. 1 to FIG. 3 illustrate a structure of a child safety seat 1000 according to some embodiments of the present application. The child safety seat 1000 includes a base 200 and a seat 100 of the child safety seat (hereinafter referred to as a seat 100 for short) according to some embodiments of the present application. The child safety seat 1000 will be described below along with the seat 100.

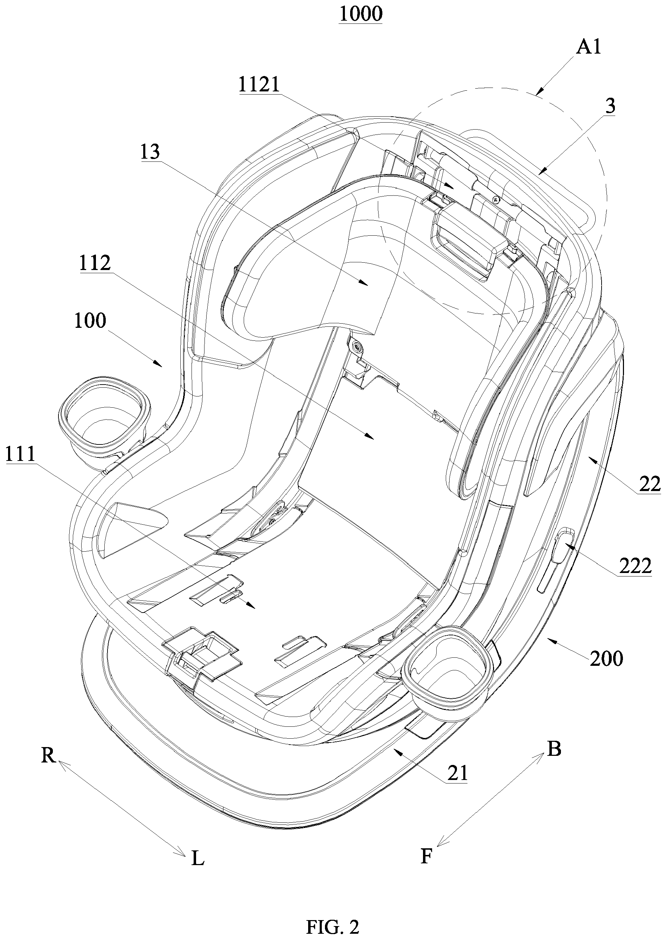

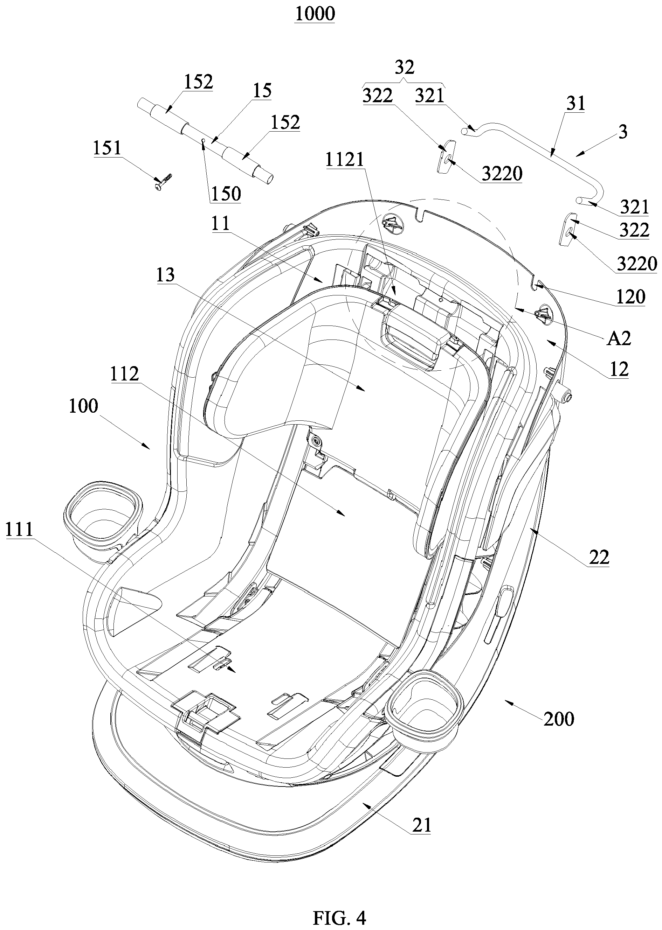

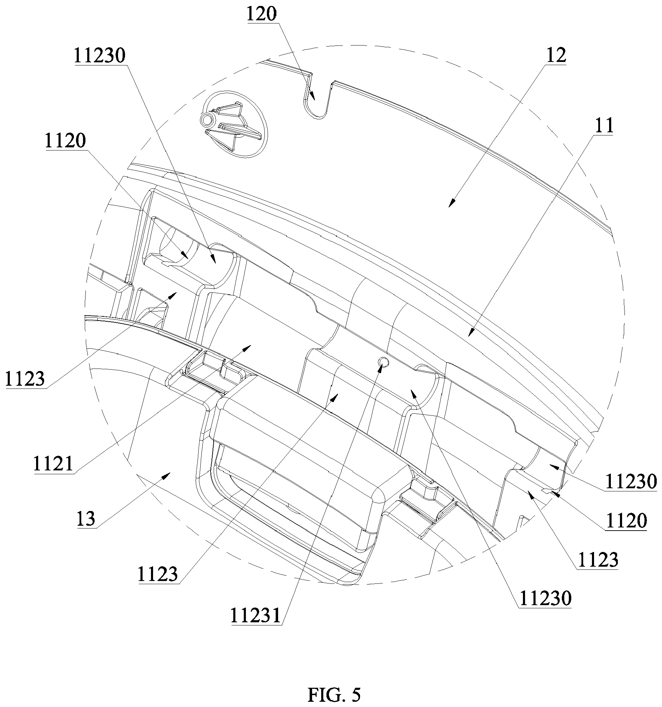

Referring to FIG. 1 and FIG. 2, the seat 100 may include a housing 1 made of plastic, a foam plastic member engaged with the housing 1, and the housing 1 and the foam plastic member define a space for receiving a child with buffering performance. An area of the seat 100 that is configured to come into contact with the child may be further covered by a seat cloth, and the seat cloth may include a sponge interlayer. Referring to FIG. 4 and FIG. 5, in some embodiments, the housing 1 of the seat 100 may include a main housing 11 and an outer housing 12, and the main housing 11 may include a seat section 111 and a backrest section 112 formed by integral injection molding. The seat section 111 is configured to support the child's hip, and the backrest section 112 is configured to support the child's back. The foam plastic member may be engaged to the flanks on the left and right sides of the seat section 111 and the backrest section 112. A headrest 13 may further be disposed on the backrest section 112, and a height of the headrest 13 may be adjusted to accommodate a seat height of the child. For example, the outer housing 12 is attached to the outside of the main housing 11 (also referred to as the back of the main housing 11), so that the housing 1 of the seat 100 has a neat appearance. Certainly, in some alternative embodiments, the outer housing 12 may be not provided, and the main housing 11 itself has a neat appearance.

The base 200 may be placed on a vehicle seat (not shown) and provide a stable support for the seat 100. The base 200 may include a base part 21 and a top supported part 22 that extends upward from a rear end of the base part 21. The base part 21 is configured to be placed on the seat of the vehicle seat. The top supported part 22 is configured to abut against the backrest of the vehicle seat, so as to prevent the child safety seat 1000 from tilting backward when being impacted. In some embodiments, an ISOFIX connector may be disposed at the rear end of the base part 21, and the ISOFIX connector is connected to a socket of the vehicle seat to fasten the base 200 to the vehicle seat. Alternatively, in some embodiments, a hook-like connector 222 may be disposed on the left and right sides of the base 200, and an in-vehicle seat belt may extend through the connector 222 to fasten the base 200 to the vehicle seat.

The seat 100 is detachably or rotatably mounted on the base part 21, for example. The seat 100 may be mounted on the base 200 facing forward or backward. When the seat 100 is mounted on the base 200 facing forward, the eyes of the child seated in the seat 100 faces the front of the vehicle. When the seat 100 is mounted on the base 200 facing backward, the eyes of the child seated in the seat 100 faces the rear of the vehicle.

It should be noted that, in this embodiment of the present application, directional terms of the seat 100 such as "front", "back", "left", and "right" are based on the "front", "rear", "left" and "right" of the child sitting in the seat 100, and the directional terms such as "front", "rear", "left" and "right" of the base 200 are based on the "front", "rear", "left" and "right" of the vehicle when the base 200 is mounted on the vehicle seat. These directional terms are only used to make the description of the embodiments of the present application clearer, and are not intended to improperly limit the scope of protection of the present application. The seat 100 shown in FIG. 1 is mounted on the base 200 facing forward. At this time, the front, back, left, and right directions of the seat 100 are consistent with the front, back, left, and right directions of the base 200. In FIG. 1, arrows F and B are used to schematically indicate the "front" and "back" directions of the base 200, and arrows L and R are used to schematically indicate the "left" and "right" directions of the base 200. It can be understood that when the seat 100 is mounted on the base 200 facing backward, the front and back directions of the seat 100 is opposite to the front and back directions of the base 200, the left and right directions of the seat 100 is opposite to the left and right directions of the base 200.

Referring to FIG. 1, a connecting handle 23 is disposed on an upper part of the top supported part 22 of the base 200, and the connecting handle 23 may extend upward from an upper edge of the top supported part 22. The connecting handle 23 is configured to connect to a first end 41 of a top tether 4, and for example, the first end 41 of the top tether 4 forms into a loop by sewing, which is sleeved on the connecting handle 23. An engaging member 3 is disposed on an upper part of the seat 100, and the engaging member 3 is used for the top tether 4 to extend through and for supporting the middle of the top tether 4. A connector 6 is disposed on a second end 42 of the top tether 4, and the connector 6 may be connected to an anchoring point (the anchoring point is generally located behind the vehicle seat) in the vehicle, so as to further fasten the child safety seat 1000 to the vehicle seat. For example, the connector 6 may be provided with a hook or any other suitable structure, as long as it can be connected to the anchoring point. In some embodiments, the top tether 4 may be provided with an adjuster 43, which may be configured to adjust an effective using length of the top tether 4 so that the top tether 4 can be tensioned. In addition, in some embodiments, a positioning structure 221 may be disposed on the base 200, and when the child safety seat 1000 is in a non-using state (for example, a transportation state), the connector 6 can be connected to the positioning structure 221, so as to prevent the second end 42 of the top tether 4 from shaking randomly.

When the foregoing child safety seat 1000 is fastened to the vehicle seat and the seat 100 is mounted on the base 200 facing forward, if the vehicle is suddenly decelerated due to an impact, the tensioned top tether 4 may simultaneously act on the seat 100 and the base 200, that is, the seat 100 and the base 200 are simultaneously restrained by the traction of the top tether 4. In this way, on one hand, a large relative movement between the seat 100 and the base 200 can be effectively avoided, and on the other hand, the child safety seat 1000 can be effectively prevented from being tilted forward under a force of inertia as a whole, so as to reduce a horizontal displacement amount of a head of the child, thereby improving seat safety and comfort of the child safety seat 1000, and providing better protection for the child.

Referring to FIG. 1, in some embodiments, the connecting handle 23 is located in a middle position on the top of the top supported part 22, and correspondingly, one engaging member 3 can be provided and located in a middle position on the outer side of the seat 100 (which may also be referred to as a rear side of the seat 100). The engaging member 3 is located above the connecting handle 23. In some embodiments, the engaging member 3 may be located on an upper part of the rear side of the seat 100, for example, near an upper edge of the seat 100.

Referring to FIG. 1, in some embodiments, the engaging member 3 cooperates with the seat 100 to define a channel 30 through which the top tether 4 extends, or in some embodiments, the engaging member 3 itself can define a channel 30 through which the top tether 4 extends. The channel 30 may limit a moving range of the top tether 4 (especially a moving range in the left-right direction) to avoid accidental disengagement of the top tether 4 from the engaging member 3 during use.

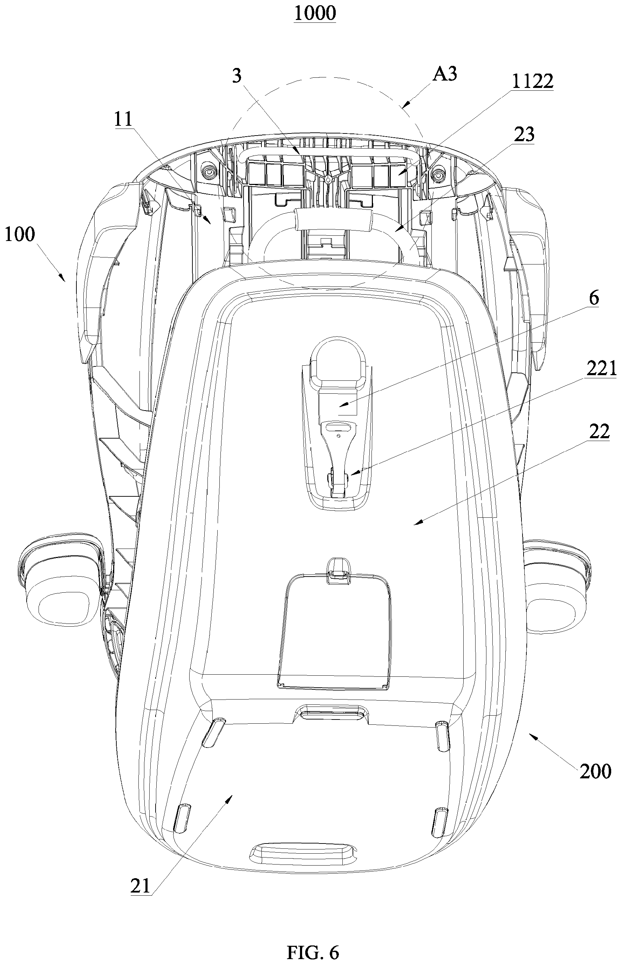

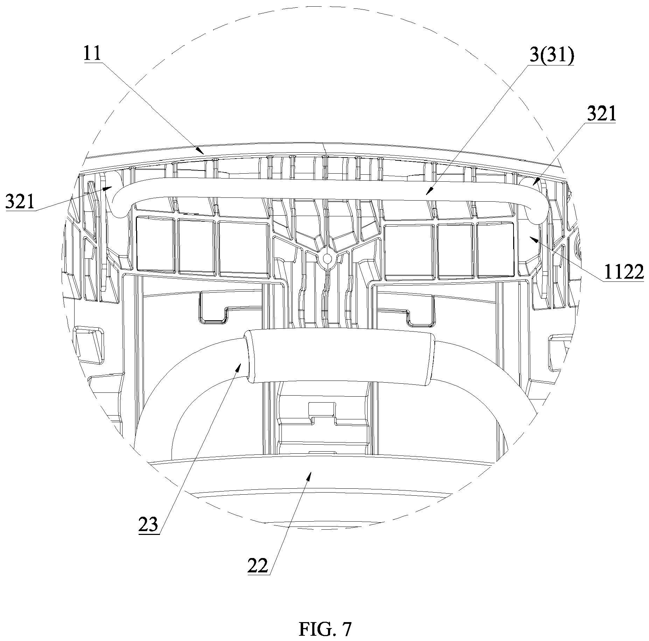

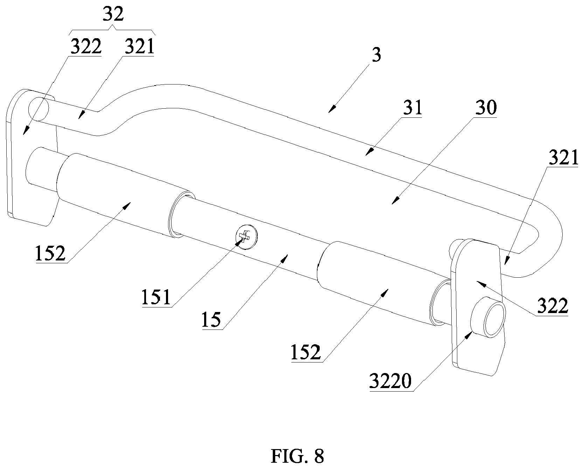

FIGS. 1 to 8 illustrate exemplary embodiments of the engaging member 3. The engaging member 3 includes an engaging rod 31 and connecting arms 32 that extends from both ends of the engaging rod 31. The engaging rod 31 is configured to support the top tether 4, and the connecting arms 32 are configured to be connected to the housing 1 of the seat 100. The engaging rod 31, the connecting arms 32, and the housing 1 of the seat 100 cooperatively define the channel 30.

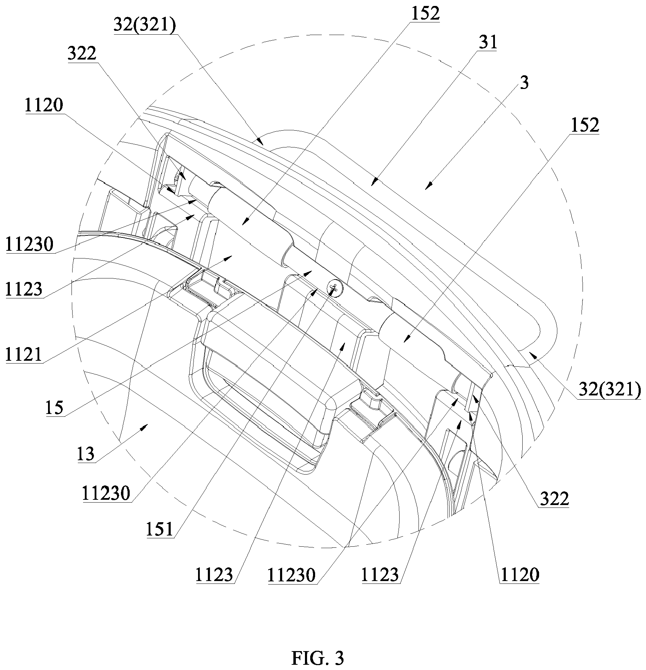

Referring to FIG. 3 and FIG. 5 to FIG. 7, an exemplary connection method of the engaging member 3 and the seat 100 is shown. Specifically, a fixing rod 15 is mounted on an inner side 1121 of the backrest section 112 (more specifically, an inner side of the main housing 11 facing the child), and the backrest section 112 is provided with a through hole 1120 penetrating through the inner side 1121 and the outer side 1122 thereof. The connecting arms 32 extend through the through holes 1120 and are connected to the fixing rod 15.

Referring to FIG. 4 and FIG. 5, for ease of fixing the fixing rod 15, for example, three clamping sockets 1123 are disposed on the inner side 1121 of the backrest section 112, and the three clamping sockets 1123 are disposed at intervals in the left-right direction of the seat 100. Each clamping socket 1123 may be provided with a clamping slot 11230, and the fixing rod 15 can be coupled to the clamping slot 11230. In addition, the fixing rod 15 may be further connected to the clamping socket 1123 of the backrest section 112 by using a fastener 151 (for example, a screw). Referring to FIG. 4, in some embodiments, for example, a hole 150 is disposed in the middle of the fixing rod 15, and the middle one of the three clamping sockets 1123 is provided with a hole 11231, for example, and the fastener 151 can connect to the hole 11231 after passing through the hole 150, thereby reliably fixing the fixing rod 15 on the backrest section 112 .

It can be understood that, in some alternative embodiments, a number of clamping sockets 1123 is not limited to three, and may be one, two, or more than three. When the number of clamping sockets 1123 is greater than one, at least one spacing sleeve 152 can be sleeved on the fixing rod 15, and each spacing sleeve 152 is located between two adjacent clamping sockets 1123. A length of each spacing sleeve 152 may be equal to a spacing between the two adjacent clamping sockets 1123. In this way, the fixing rod 15 can be rapidly positioned by clamping the spacing sleeve 152 between the two adjacent clamping sockets 1123, so that the hole 150 and the hole 11231 can be rapidly aligned with each other. In addition, in some alternative embodiments, there may be multiple variations in the number and a setting location of the fastener 151, which are not limited to the foregoing examples, as long as the fixing rod 15 and the backrest section 112 can be fastened together. For example, the fastener 151 may be connected to any clamping socket 1123. In addition, in some alternative embodiments, the inner side 1121 of the backrest 112 may not be provided with a clamping socket 1123 , and the rod 15 may be directly connected to the backrest 112 by using at least one fastener 151.

Referring to FIG. 3, FIG. 4, and FIG. 8, in some embodiments, each connecting arm 32 includes an arm body 321 and a plate 322, for example. The arm body 321 is connected to the engaging rod 31. The plate 322 is provided with a hole 3220, and the plate 322 is sleeved on the fixing rod 15 by using the hole 3220, so that the engaging member 3 is connected to the fixing rod 15.

A connecting process between the connecting arm 32 and the fixing rod 15 will be described below with reference to FIG. 4 and FIG. 5. The spacing sleeve 152 is pre-mounted on the fixing rod 15, and then the plate 322 is sleeved on the fixing rod 15, and then the fixing rod 15 is mounted in the clamping slot 11230 of the clamping socket 1123, and the plate 322 extends through the through hole 1120. Then, the fastener 151 is connected to the hole 11231 after passing through the hole 150, and thus the fixing rod 15 can be reliably fastened to the inside side 1121 of the backrest section 112. Finally, each arm body 321 is connected to the corresponding plate 322 by welding, for example.

In some embodiments, after the connecting arms 32 and the fixing rod 15 are connected together, the outer housing 12 is mounted on the main housing 11. It can be seen from FIG. 5 that the upper edge of the outer housing 12 may be provided with a notch 120 that cooperates with the arm body 321 to prevent the arm body 321 from interfering with the installation of the outer housing 12. In some embodiments, a connecting point between the arm body 321 and the plate 322 is located between the main housing 11 and the outer housing 12, so that the seat 100 has a neat appearance.

The fixing rod 15, the engaging rod 31, the connecting arm 321, and the connecting handle 23 may be solid rods or pipes, and their cross-sectional shapes may be any suitable shapes such as circular, square, oval, etc.

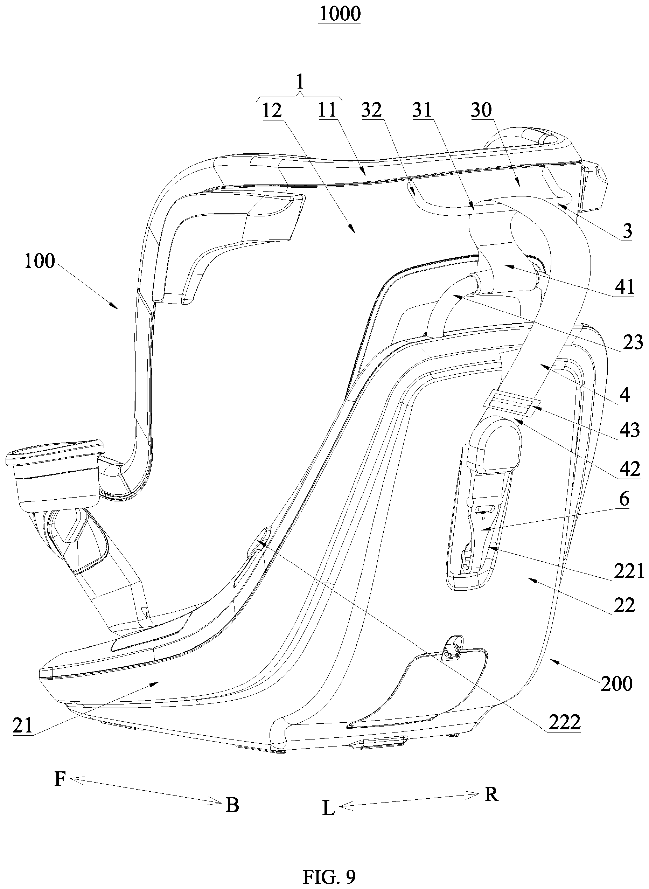

FIG. 9 illustrate another exemplary embodiment of the engaging member 3. The engaging member 3 includes an engaging rod 31 and connecting arms 32 that extends from both ends of the engaging rod 31, for example. The engaging rod 31 is configured to support the top tether 4, and the connecting arms 32 are configured to be connected to the housing 1 of the seat 100. More specifically, the engaging member 3 is integrated with the main housing 11 or the outer housing 12 of the housing 1, for example. In some embodiments, the engaging member 3 is integrated with the main housing 11 or the outer housing 12 by injection molding, for example. The engaging member 3 cooperates with the seat 100 to define a channel 30 through which the top tether 4 extends.

Since the engaging member 3 and the housing of the seat 100 are an integral structure, an assembly step of the engaging member 3 and the seat 100 can be omitted, which is beneficial to improving a production efficiency of the child safety seat 1000. In addition, a connection strength between the engaging member 3 and the seat 100, which are integrated, is high, and the engaging member 3 is not easy to disengage from the seat 100. With reference to the foregoing, it can be known that when the connector 6 located at the second end 42 of the top tether 4 is connected to the anchoring point in the vehicle after extending through the channel 30, the child safety seat 1000 can be better fixed. The top tether 4 can effectively prevent the child safety seat 1000 from being tilted forward under a force of inertia as a whole, so as to reduce a horizontal displacement amount of a head of the child, thereby improving seat safety and comfort of the child safety seat 1000, and providing better protection for the child.

FIGS to 10 illustrate yet another exemplary embodiment of the engaging member 3. The engaging member 3 includes, for example, a belt (for example, a webbing belt), and both ends of the belt are respectively connected to the seat 100 . More specifically, for example, two holes 303 are disposed on the housing 1 (for example, the outer housing 12). After the two ends of the belt are respectively extending forward through the hole 303 to the inner side of the housing 1, the two ends of the belt are restrained and cannot be drawn backward through the hole 303. The belt cooperates with the seat 100 to define a channel 30 through which the top tether 4 extends. In some embodiments, retraining members such as a tri-glide buckle and a bowtie may be respectively disposed at two ends of the belt, and a size of the retraining member is greater than a size of the hole 303, so as to prevent the two ends of the belt from being drawn backward from the hole 303.

With reference to the foregoing, it can be known that when the connector 6 located at the second end 42 of the top tether 4 is connected to the anchoring point in the vehicle after extending through the channel 30, the child safety seat 1000 can be better fixed. The top tether 4 can effectively prevent the child safety seat 1000 from being tilted forward under a force of inertia as a whole, so as to reduce a horizontal displacement amount of a head of the child, thereby improving seat safety and comfort of the child safety seat 1000, and providing better protection for the child.

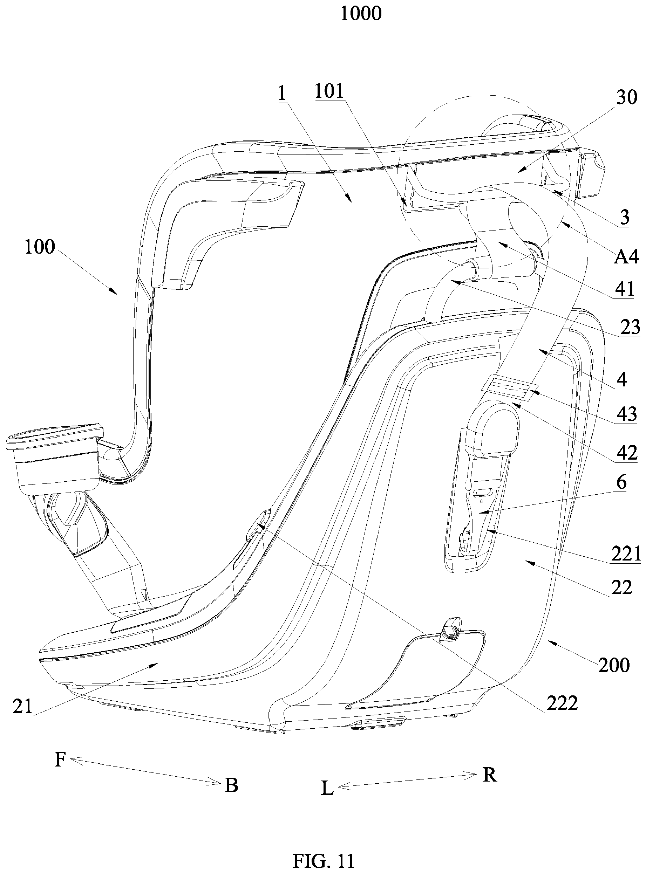

FIGS. 11 to 13 illustrate yet another exemplary embodiment of the engaging member 3. The engaging member 3 includes an engaging rod 31 and connecting arms 32 that extends from both ends of the engaging rod 31, for example. The engaging rod 31 is configured to support the top tether 4, and the connecting arms 32 are configured to be movably connected to the housing 1 of the seat 100, such as being pivotally connected to the housing 1 of the seat 100. The engaging member 3 has a using position deployed from the seat 100 and a stowed position attached to the seat 100.

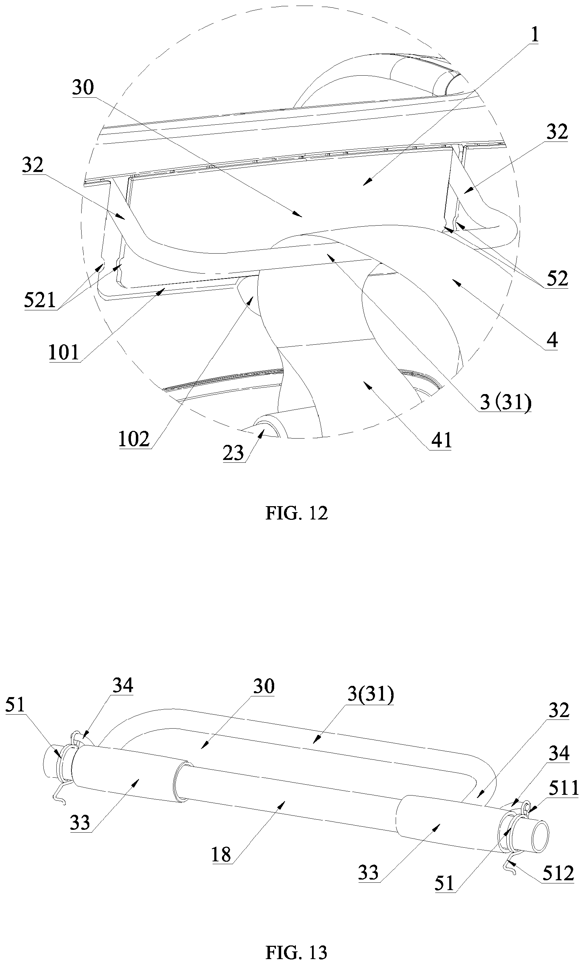

When the child safety seat 1000 is in a using state, the engaging member 3 switches to the using position shown in FIG. 11 and FIG. 12, so as to withstand a pulling force from the top tether 4. The engaging member 3 cooperates with the seat 100 to define a channel 30 through which the top tether 4 extends. When the engaging member 3 is not needed, the engaging member 3 can be switched to the stowed position to reduce a size of the seat 100. When the child safety seat 1000 is mounted on the vehicle seat, the engaging member 3 does not easily interfere with rotation of the seat 100 after switching to the stowed position, and the seat 100 may be easily switched from a forward-facing installation configuration to a rearward-facing installation configuration. After the child safety seat 1000 is removed from the vehicle seat, the engaging member 3 can be switched to the stowed position, so as to help reduce a packaging volume and transport cost of the seat 100.

Referring to FIG. 12, in some embodiments, a groove 101 may be disposed on the outer side of the housing 1 of the seat 100. When the engaging member 3 is switched to the stowed position, the engaging member 3 can be received in the groove 101 and protected, so that the seat 100 has a neat appearance. In some embodiments, a width of the groove 101 may be substantially the same as the size of the engaging member 3, so as not to generate a large gap.

In some embodiments, the seat 100 may further be provided with a first holding mechanism 51 and a second holding mechanism 52, the first holding mechanism 51 is configured to keep the engaging member 3 in the using position, and the second holding mechanism 52 is configured to keep the engaging member 3 in the stowed position.

There are many implementations of the first holding mechanism 51 and the second holding mechanism 52. FIG. 12 and FIG. 13 illustrate exemplary implementations of the first holding mechanism 51 and the second holding mechanism 52.

Referring to FIG. 13, the connecting arm 32 of the engaging member 3 is connected to the seat 100 via a pivot 18, for example. In some embodiments, the pivot 18 may be secured to a support (not shown) within the seat 100. A sleeve 33 is disposed at an end of the connecting arm 32, and the sleeve 33 is pivotally connected to the pivot 18. The first holding mechanism 51 includes, for example, a torsion spring, which may be sleeved on the pivot 18 and connected to the engaging member 3 and the seat 100, respectively. Referring to FIG. 13, in some embodiments, the sleeve 33 of the engaging member 3 may be connected to one spring arm 511 of the torsion spring by using a cylinder 34, and the other spring arm 512 of the torsion spring may be connected to any suitable structure in the seat 100. The torsion spring keeps the engaging member 3 in the using position.

When the engaging member 3 needs to be switched to the stowed position, the engaging member 3 is driven to pivot to the stowed position. In some embodiments, the second holding mechanism 52 includes, for example, a clamping protrusion 521 disposed in the groove 101. After the engaging member 3 passes over the clamping protrusion 521 and is received in the groove 101, the clamping protrusion 521 restrains the engaging member 3 from rotating toward the using position.

Referring to FIG. 12, in some embodiments, a recess 102 communicating with the groove 101 may further be disposed on the outer side of the housing 1 of the seat 100, and the user may easily pull the engaging member 3 out of the groove 101 at the recess 102, so that the engaging member 3 can be switched to the using position. When the engaging member 3 is in the using position, with reference to the foregoing, it can be known that when the connector 6 located at the second end 42 of the top tether 4 is connected to the anchoring point in the vehicle after extending through the channel 30, the child safety seat 1000 can be better fixed. The top tether 4 can effectively prevent the child safety seat 1000 from being tilted forward under a force of inertia as a whole, so as to reduce a horizontal displacement amount of a head of the child, thereby improving seat safety and comfort of the child safety seat 1000, and providing better protection for the child.

The technical features of the above described embodiments can be combined arbitrarily. To simplify the description, not all possible combinations of the technical features in the above embodiments are described. However, all of the combinations of these technical features should be considered as within the scope of the present application, as long as such combinations do not contradict with each other. The foregoing embodiments are merely some embodiments of the present application, and descriptions thereof are relatively specific and detailed.

## Claims

1. A seat (100) of a child safety seat (1000) configured to be mounted on a base (200) of the child safety seat (1000), **characterized in that** an upper part of the seat (100) is provided with an engaging member (3), and the engaging member (3) is configured for a top tether (4) connected to the base (200) to extend through, and for supporting the top tether (4).

2. The seat (100) of the child safety seat (1000) according to claim 1, **characterized in that** the engaging member (3) is located in a middle position of an outer side of the seat (100).

3. The seat (100) of the child safety seat (1000) according to claim 1 or 2, **characterized in that** the engaging member (3) itself defines a channel (30) through which the top tether (4) extends, or the engaging member (3) cooperates with the seat (100) to define a channel (30) through which the top tether (4) extends.

4. The seat (100) of the child safety seat (1000) according to any one of claims 1 to 3, **characterized in that**:
the seat (100) comprises a main housing (11), the main housing (11) comprises a seat section (111) and a backrest section (112), a fixing rod (15) is mounted on an inner side of the backrest section (112), and the backrest section (112) is provided with a through hole (1120) penetrating the inner side and the outer side thereof;
the engaging member (3) comprises an engaging rod (31) and connecting arms (32) extending from both ends of the engaging rod (31), the engaging rod (31) is configured to support the top tether (4), and the connecting arm (32) extends through the through hole (1120) and is connected to the fixing rod (15).

5. The seat (100) of the child safety seat (1000) according to claim 4, **characterized in that**:
at least two clamping sockets (1123) are disposed on the inner side of the backrest section (112), the at least two clamping sockets (1123) are disposed at intervals in a left-right direction of the seat (100), each clamping socket (1123) is provided with a clamping slot (11230), and the fixing rod (15) is clamped into the clamping slot (11230); and/or
the fixing rod (15) is connected to the backrest section (112) by at least one fastener.

6. The seat (100) of the child safety seat (1000) according to claim 4, **characterized in that** at least two clamping sockets (1123) are disposed on the inner side of the backrest section (112), the at least two clamping sockets (1123) are disposed at intervals in a left-right direction of the seat (100), each clamping socket (1123) is provided with a clamping slot (11230), and the fixing rod (15) is clamped into the clamping slot (11230), at least one spacing sleeve (152) is sleeved on the fixing rod (15), and each spacing sleeve (152) is located between two adjacent clamping sockets (1123).

7. The seat (100) of the child safety seat (1000) according to any one of claims 4 to 6, **characterized in that** each connecting arm (32) comprises an arm body (321) and a plate (322); the arm body (321) is connected to the engaging rod (31); and the plate (322) is sleeved on the fixing rod (15) and extends through the through hole (1120) to connect to the arm body (321).

8. The seat (100) of the child safety seat (1000) according to claim 7, **characterized in that** the seat (100) further comprises an outer housing (12) mounted on the outer side of the main housing (11), an upper edge of the outer housing (12) is provided with a notch (120) that cooperates with the arm body (321), and a connecting point between the arm body (321) and the plate (322) is located between the main housing (11) and the outer housing (12).

9. The seat (100) of the child safety seat (1000) according to any one of claims 1 to 3, **characterized in that** the seat (100) comprises a plastic housing, and the engaging member (3) is formed integrally with the plastic housing.

10. The seat (100) of the child safety seat (1000) according to any one of claims 1 to 3, **characterized in that** the engaging member (3) comprises a belt, and two ends of the belt are connected to the seat (100), respectively.

11. The seat (100) of the child safety seat (1000) according to any one of claims 1 to 8, **characterized in that** the engaging member (3) is movably connected to the seat (100), and the engaging member (3) has a using position deployed from the seat (100) and a stowed position attached to the seat (100).

12. The seat (100) of the child safety seat (1000) according to claim 11, **characterized in that**:
the outer side of the seat (100) is provided with a groove (101) for receiving the engaging member (3); and/or
the engaging member (3) is pivotally connected to the seat (100).

13. The seat (100) of the child safety seat (1000) according to claim 11 or 12, **characterized in that** the engaging member (3) is connected to the seat (100) via a pivot (18), the seat (100) is provided with a first holding mechanism (51) and a second holding mechanism (52), the first holding mechanism (51) is configured to keep the engaging member (3) in the using position, and the second holding mechanism (52) is configured to keep the engaging member (3) in the stowed position.

14. A child safety seat (1000) comprising a base (200), a top tether (4), and the seat (100) of the child safety seat (1000) according to any one of claims 1 to 13.

15. The child safety seat (1000) according to claim 14, **characterized in that** the seat (100) is mounted on the base (200) facing forward, a first end of the top tether (4) is connected to the base (200), a middle part of the top tether (4) is supported by the engaging member (3), and a second end of the top tether (4) is provided with a connector (6).
